# EUROPEAN PATENT SPECIFICATION

(11) **EP 2 163 098 B1**
(45) Date of publication and mention of the grant of the patent: **24.08.2011**
(21) Application number: 08760258.7
(22) Date of filing: 30.05.2008
(51) Int. Cl.: H04N 7/26, H04N 7/46, H04N 7/50

(54) **DEVICE AND METHOD FOR CODING A VIDEO CONTENT IN THE FORM OF A SCALABLE STREAM**
EINRICHTUNG UND VERFAHREN ZUM CODIEREN EINES VIDEOINHALTS IN FORM EINES SKALIERBAREN STROMS
DISPOSITIF ET PROCÉDÉ SERVANT À CODER UN CONTENU VIDÉO SOUS LA FORME D'UN FLUX EXTENSIBLE

(30) Priority: 05.06.2007 FR 0755464
(43) Date of publication of application: 17.03.2010
(73) Proprietor: Thomson Licensing, 92130 Issy-les-Moulineaux (FR)
(72) Inventor: FRANCOIS, Edouard, F-35890 Bourgdes-comptes (FR); BOTTREAU, Vincent, F-35220 Chateaubourg (FR); CHEVANCE, Christophe, F-35530 BRECE (FR); VIERON, Jérome, F-35000 Rennes (FR)
(74) Representative: Lorette, Anne
(86) International application number: PCT/EP2008/056668
(87) International publication number: WO 2008/148708

(56) References cited:
- WO-A-92/10061
- WO-A-2006/118384
- US-A- 5 742 343
- US-A1- 2007 009 039
- VIERON J, BOTTREAU V, FRANCOIS E, LOPEZ P: "Inter-layer prediction for scalable interlace/progressive video coding" JOINT VIDEO TEAM (JVT) OF ISO/IEC MPEG & ITU-T VCEG (ISO/IEC JTC1/SC29/WG11 AND ITU-T SG16 Q.6), 18TH MEETING), BANGKOK, THAILAND, 17-23 JANUARY 2006, 17 January 2006 (2006-01-17), pages 1-21, XP030006282 Document JVT-R014
- BAYRAKERI S ET AL: "MPEG-2/ECVQ LOOKAHEAD HYBRID QUANTIZATION AND SPATIALLY SCALABLE CODING" PROCEEDINGS OF THE SPIE, SPIE, BELLINGHAM, VA, US, vol. 3024, 1997, pages 129-137, XP008042521 ISSN: 0277-786X
- FRANCOIS E ET AL: "Restrictions on interlaced coding in SVC" JOINT VIDEO TEAM (JVT) OF ISO/IEC MPEG & ITU-T VCEG (ISO/IEC JTC1/SC29/WG11 AND ITU-T SG16 Q.6), 23RD MEETING, SAN JOSE, CA, USA, 21-27 APRIL 2006, 21 April 2007 (2007-04-21), pages 1-8, XP030006985 Document JVT-W025

## Description

### 1. Scope of the invention

The invention relates to the general domain of the coding of a video content in the form a temporally scalable stream.

The invention relates more particularly to a device and a method for coding a video content in the form of a temporally scalable stream, said content being represented by a first group of interlaced pictures formed by a first field interlaced with a second field and a second group of progressive pictures.

### 2. Prior art

Multi-layer coding methods are known that are suitable to code a video content in the form of a scalable stream of coded data. Scalability represents the capacity to scale the information to make it decodable at several levels of resolution and/or quality and/or temporal frequency. A coded data stream generated by this type of coding method is generally divided into several layers, particularly a base layer and one or more enhancement layers. Such a coding procedure enables the video content to be coded in the form of a single stream that can adapt for example to the varied capacities (in terms of CPU, characteristics of the display device, etc.) of the reception devices. A first reception device can only decode the part of the stream relative to the base layer whereas a second more effective device can decode the entire stream. Such a coding method is particularly interesting to code a video content in the form of a single stream, the base layer being relative to a first version of the content, e.g. to the HD 1080i 30 Hz version, and the enhancement layer being relative to the a second version of the same video content, e.g. to the HD 1080p 60 Hz version. Such a coded data stream can advantageously be decoded by the current decoding platforms that are capable of reconstructing contents in the HD 1080i 30Hz format. This same content will also in the future be able to be decoded by future decoding platforms capable of reconstructing contents in the HD 1080p 60Hz format. The current platforms only decode the part of the stream relative to the base layer and the future platforms will decode the entire stream.

Such a coding method is suitable to code pictures or parts of pictures (e.g. blocks or macroblocks) of the enhancement slayer from picture parts of the base layer by means of tools known under the name of inter-layer prediction. Such tools are defined in the document JVT-V201 of the ISO/IEC MPEG and the ITU-T VCEG published in January 2007 and entitled "Joint Draft 9 of SVC amendment". This document describes the SVC extension of MPEG-4 AVC relating to scalability. More precisely, a picture data block of a picture of the enhancement layer is predicted spatially (intra coding mode) or temporally (inter coding mode). In this last case, it is predicted either according to a standard prediction mode from picture blocks of the enhancement layer (for example bidirectional prediction mode, direct prediction mode, anticipated prediction mode, etc.) or else is predicted according to an inter-layer prediction mode from picture blocks of the base layer. In this last case, motion data (for example, a partitioning of the macroblock into blocks, possibly motion vectors and reference picture indices) and possibly picture data associated with a picture block of the enhancement layer are deduced or inherited from motion data respectively of the picture data associated with picture blocks of the base layer.

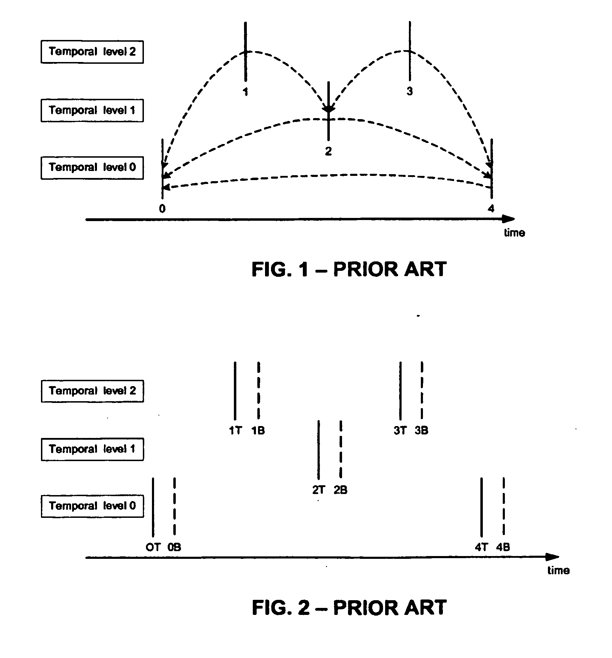

Moreover, coding methods are known that are suitable to code a video content per GOP (Group Of Pictures) according to a hierarchical GOP structure such as shown in figure 1 for progressive pictures. In this figure, a GOP is coded according to a dyadic inter-picture temporal dependence structure (M. Flierl and B. Girod, "Generalized B Pictures and the Draft JVT/H.264 Video Compression standard", IEEE Trans. on Circuits and Systems for Video Technology, vol. 13, pp. 587-597, July 2003). The temporal dependences between pictures are shown by a dotted line. Picture 2 temporally depends on pictures 0 and 4, i.e. picture 2 or part of picture 2 can be coded by temporal prediction with reference to pictures 0 and 4. According to such a structure, the pictures are coded on several temporal levels, a picture of a given temporal level only being able to be coded with reference to the pictures of lower or equal temporal level, themselves previously coded. The structure is known as dyadic to the extent that the pictures of a given temporal level being at a frequency F, if the pictures of the next temporal level are added, a sequence at a frequency twice the previous one is obtained, namely 2F. Such a structure advantageously enables a temporally scalable data stream to be generated by providing a high compression rate. Indeed, by ignoring the higher temporal levels, i.e. by not decoding the coded data stream part relating to these levels, the temporal frequency of the video is thus reduced with respect to the temporal frequency of the video that would have been reconstructed by decoding the entire coded data stream. To achieve this, an item of temporal level information is inserted into the stream. This information is particularly used by a decoding method to identify the coded data packets relating to a given temporal level and consequently to identify the coded data packets to ignore to reconstruct a video content at a given frequency. According to the SVC standard, this temporal level information is coded in the header of each NAL (Network Adaptation Layer) type packet.

In the case of an interlaced video, each picture is formed by a first field interlaced with a second field. When the interlaced video is coded in picture mode, the two fields of the picture are coded simultaneously. When the interlaced video is coded in field mode, both fields of a picture are coded consecutively, i.e. the second field is coded immediately after the first field. This type of coding advantageously enables the memory space requirements of the decoder to be reduced. Indeed, if the two fields of a same picture are not coded consecutively, it is necessary, on the decoder side, to store the first reconstructed field in memory until this second field is itself reconstructed, so as to be able to restore the whole picture. Such an approach requires more memory space.

If the first field is the field known as the upper or TOP field then the second field is the lower field or BOTTOM field and vice versa. The hierarchical GOP structure illustrated by figure 1 in the case of a progressive video is applied, in the case of an interlaced video coded in field mode, by replacing a picture by the two fields that compose it, as illustrated in figure 2. In this figure, the TOP field is shown by a solid line and the BOTTOM field is shown by a dotted line. In figure 2, an interlaced picture of index k is composed of a TOP field referenced kT and a BOTTOM field referenced kB. In such a diagram, the two fields 2T and 2B of the picture 2 are coded consecutively, i.e. the second field of the picture 2 is coded immediately after the first field of the picture 2. This makes it possible not to introduce any time for the coding of the picture 2 and consequently for a future decoding of said picture. In such a diagram, all or part of the field 2T can be coded with reference to the previously coded fields 0T, 0B, 4T and 4B. Note that this field can also be fully or partly coded in intra mode, i.e. independently from any other picture of the sequence. As for the field 2B, it can be fully or partly coded with reference to the previously coded fields 0T, 0B, 4T and 4B and also with reference to the field 2T. This structure has the same advantages in the interlaced case as in the progressive case (i.e. high compression rate and temporal scalability).

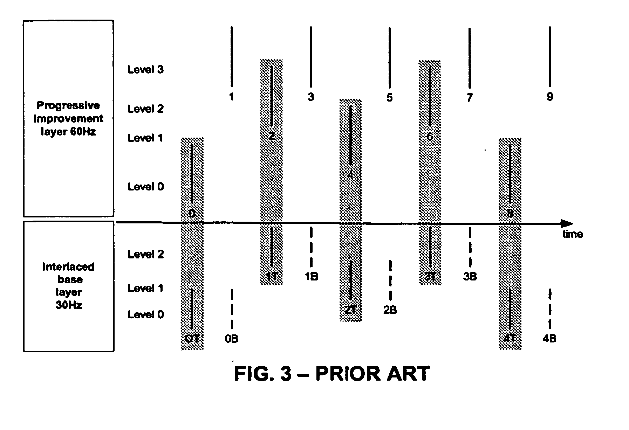

Furthermore, multi-layer coding methods are known in which the base layer and the enhancement layer are coded according to the hierarchical GOP structure as illustrated by the figures 1 and 2. Such a two-layer hierarchical GOP structure, an interlaced base layer and a progressive enhancement layer, is shown in figure 3. In this figure, the progressive pictures of the enhancement layer are referenced by their index k. A timestamp is associated with each picture of the enhancement layer and with each field of the base layer. In figure 3, a picture of the enhancement layer and a field of the base layer having the same timestamp coincide vertically. The pictures of the enhancement layer can be coded with reference to the corresponding field, i.e. with the same timestamp, in the base layer using inter-layer prediction tools or with reference to one or more previously coded pictures of the enhancement layer or even independently from the other pictures of the sequence (intra-coding). For instance, picture 2 of the enhancement layer can be fully or partly coded from data of the field 1T of the base layer by means of inter-layer prediction methods. However, when such a structure is used within the context of the SVC standard, some pictures of the enhancement layer cannot use the inter-layer prediction. This is the case of temporal level 3 pictures. Indeed, the SVC standard only allows inter-layer prediction between pictures of identical temporal levels. However, namely picture 1 is at the temporal level 3 whereas the field of the same timestamp, i.e. the field 0B, is at the temporal level 0. Moreover, the SVC standard, through the definition of profiles, limits the size of the memory suitable to store the reference pictures. Owing to this limitation in memory size, the picture 0B is no longer present in said reference picture memory during the coding of picture 1 of the enhancement layer. Indeed, the pictures and frames are coded in the following order: 0T, 0B, 0, 4B, 4T, 8, 2T, 2B, 4, 1T, 1B, 2, 3T, 3B, 6, 1, 3, 5, 7, 9. Hence, supposing that the reference picture memory has the capability of storing 4 reference pictures, the pictures 0T, 0B and 0 are therefore no longer available during the coding of the picture 1 for it to use as reference. To be able to make the inter-layer prediction level between picture 1 and the corresponding field 0B, 15 reference pictures must be stored in memory. The fact of not being able to code some pictures of the enhancement layer by inter-layer prediction has a negative effect on the coding performances.

The disclosure of document VIERON J, BOTTREAU V, FRANCOIS E, LOPEZ P: "Inter-layer prediction for scalable interlace/progressive video coding", JOINT VIDEO TEAM (JVT) OF ISO/IEC MPEG & ITU-T VCEG (ISO/IEC JTC1/SC29/WG11 AND ITU-T SG16 Q.6), 18TH MEETING, BANGKOK, THAILAND, 17-23 JANUARY 2006, 17 January 2006 (2006-01-17), pages 1-21, Document JVT-R014 is also related to the prior art described up to now.

### 3. Summary of the invention

The purpose of the invention is to compensate for at least one disadvantage of the prior art.

The invention relates to a method of coding a video content in the form of a temporally scalable stream. This content is represented by a first group of interlaced pictures formed by a first field interlaced with a second field and by a second group of progressive pictures, each picture of the second group coinciding with a field of the first group. The method comprises the following steps:
- coding the fields of the first group on M temporal levels according to a first predefined coding order, with M an integer strictly greater than 1, such that the second field of an interlaced picture is coded immediately after the first field of this interlaced picture, and
- coding the pictures of the second group of pictures on M temporal levels in a second predefined coding order.
According to an essential characteristic of the invention, the second coding order equals the first coding order.

Advantageously, the method enables each picture of the enhancement layer to be coded fully or partly with reference to a field of the base layer by inter-layer prediction.

According to another aspect, the second field of a picture of the first group of pictures is coded at a temporal level strictly higher than the temporal level at which the first field of the picture is coded and the picture of the second group that coincides with the second field is coded at a temporal level strictly higher than the temporal level at which the picture of the second group that coincides with the first field is coded.

According to a particular characteristic of the invention, a field coded at a given temporal level is coded fully or partly with reference to a previously coded field at a level lower than or equal to the given temporal level.

The invention also relates to a device for coding a video content in the form of a temporally scalable stream. This content is represented by a first group of interlaced pictures formed by a first field interlaced with a second field and by a second group of progressive pictures, each picture of the second group coinciding with a field of the first group. The device comprises:
- first coding means for coding the fields of the first group on M temporal levels according to a first predefined coding order, with M an integer strictly greater than 1, such that the second field of an interlaced picture is coded immediately after the first field of this interlaced picture, and
- second coding means for coding the pictures of the second group of pictures on M temporal levels in a second predefined coding order.

According to an essential characteristic of the invention, the second coding order equals the first coding order.

### 4. List of figures

The invention will be better understood and illustrated by means of embodiments and implementations, by no means limiting, with reference to the figures attached in the appendix, wherein:
- figure 1 illustrates a hierarchical structure of a group of progressive pictures according to the prior art,
- figure 2 illustrates a hierarchical structure of a group of interlaced pictures according to the prior art,
- figure 3 illustrates a multi-layer structure of a group of pictures according to the prior art,
- figure 4 illustrates a multi-layer structure of a group of pictures according to a first embodiment of the invention,
- figure 5 illustrates a multi-layer structure of a group of pictures according to a second embodiment of the invention,
- figure 6 shows a coding method according to the invention,
- figure 7 illustrates a coding device according to the invention, and
- figure 8 illustrates a coding device according to a variant of the invention.

### 5. Detailed description of the invention

The invention relates to a method and a device for coding a video content in the form of a temporally scalable stream. The video content is represented by a first group of interlaced pictures, i.e. formed by a first field interlaced with a second field, and a second group of progressive pictures, each picture of the second group temporally coinciding with a field of the first group, i.e. having the same timestamp. The pictures of the first group, called pictures of the base layer, are coded in the form of a base layer and the pictures of the second group, called pictures of enhancement layer, are coded in the form of an enhancement layer.

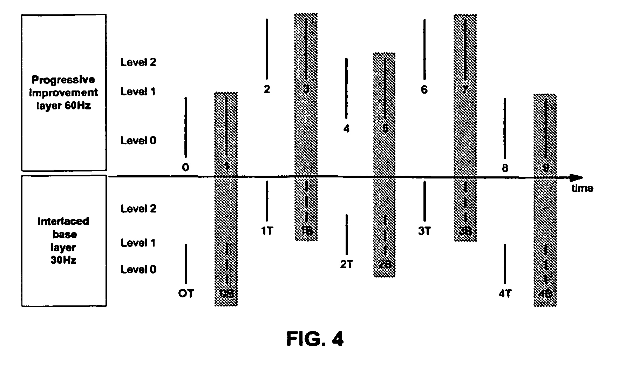

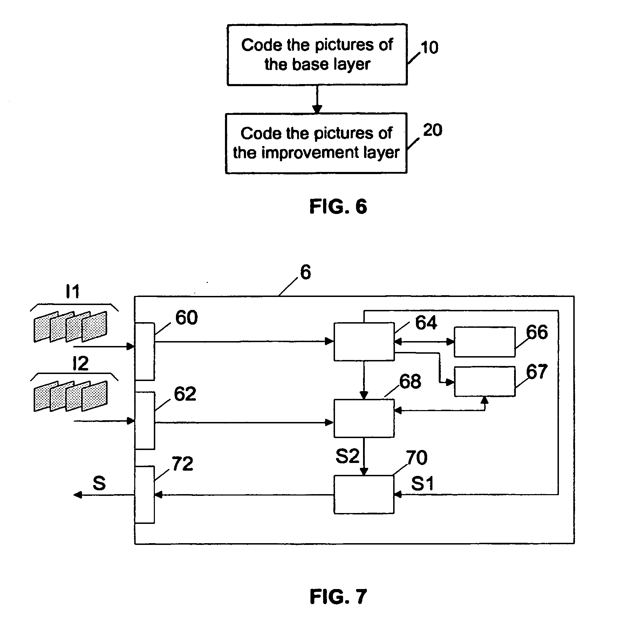

With reference to figures 4 and 6, a first embodiment of the invention is described for a first group of M/2 interlaced pictures, i.e. M fields, and a second group of M progressive pictures, where M is a positive whole number. In figures 4 and 6, M=10. The 10 pictures or fields are coded on 3 temporal levels referenced level 0, level 1 and level 2 according to a dyadic structure of hierarchical GOP. The invention comprises a coding step 10 in field mode of the interlaced pictures of the base layer. The pictures of the base layer are coded, for example, according to the standard MPEG-4 AVC defined in the ISO/IEC document 14496 -10:2005, the temporal dependences being determined by the GOP structure defined with reference to figure 2. The frames of the base layer are coded according to a predefined coding order. In this example, the fields of the level 0 are coded before the fields of the higher levels in the following order: 0T, 0B, 4T and 4B. The fields of level 1 are then coded in the following order: 2T and 2B possibly with reference to the fields of the level 0. The field 2B can also be coded fully or partly with reference to the field 2T. Then, the fields of level 2 are coded in the following order: 1T, 1 B, 3T, 3B. The field 1T is coded fully or partly with reference to the frames of the lower layers previously coded and still stored in memory at the moment of its coding. Likewise, the field 1 B, the field 3T and the field 3B are coded with reference to the fields of the lower levels or with reference to the fields of the same previously coded temporal level. The step 10 of the invention is identical to the coding step of the base layer according to the method of the prior art described herein with reference to figure 2.

According to an essential characteristic of the invention, in step 20, the pictures of the enhancement layer are coded according to a standard hierarchical GOP structure as defined in the prior art with reference to figures 1 and 3. For this purpose, the structure of the GOP illustrated in figure 3 is modified in such a manner that the pictures of the enhancement layer are coded in the same coding order as the fields of the base layer. The two pictures of the enhancement layer that coincide temporally with two fields of a same picture of the base layer are coded consecutively, the second picture being coded immediately after the first picture which was not the case in the standard structure. For example, with the standard hierarchical GOP structure, the picture 1 is not coded immediately after the picture 0. Indeed, the pictures 8, 4, 2 and 6 are coded between the two.

The new hierarchical GOP structure enables the pictures of the enhancement layer to be coded per pair in the same coding order as the fields of the base layer, namely that the picture of the enhancement layer having the same timestamp as the second field of a picture of the base layer is coded immediately after the picture of the enhancement layer having the same timestamp as the first field of said picture of the base layer. In this embodiment, the pictures and frames are coded in the following order: 0T, 0B, 0, 1, 4T, 4B, 8, 9, 2T, 2B, 4, 5, 1T, 1 B, 2, 3, 3T, 3B, 6, 7. The pictures of the base layer are therefore coded in the following order: 0, 1, 8, 9, 4, 5, 2, 3, 6, 7, which is the same coding order as the fields of the base layer, i.e. 0T, 0B, 4T, 4B, 2T, 2B, 1T, 1B, 3T, 3B. Consequently, supposing that the reference picture memory has the capacity for storing 4 reference pictures, the pictures 0T, 0B and 0 are therefore available during the coding of picture 1 to be used for reference, which was not the case with the dyadic GOP structure defined with reference to figure 3. Note that in the latter case, it is necessary to store 15 reference pictures so that the picture 1 will benefit from the inter-layer prediction. Hence, a picture of the enhancement layer of index 2k benefits from inter-layer prediction from the kTOP field, whereas the picture 2k+1 benefits from the inter-layer prediction from the k BOTTOM field. As the pictures 2k and 2k+1 are coded consecutively, i.e. in the same coding order as the fields of the base layer, the problem of unavailability of the k BOTTOM field no longer arises. All the pictures with odd indices can therefore benefit from the inter-layer prediction from their corresponding BOTTOM field (as shown by the grey rectangles in figure 4), which enables the coding efficiency of the video content to be increased. Such a GOP structure gives priority to the inter-layer prediction for all the pictures of the enhancement layer.

However, although it enables the temporal scalability to be obtained by shedding the pictures of higher temporal levels, namely level 2, this temporal scalability is less fine than the scalability obtained with a GOP structure as defined with reference to figure 3, because two consecutive pictures are necessarily removed, e.g. the pictures 2 and 3, and 6 and 7.

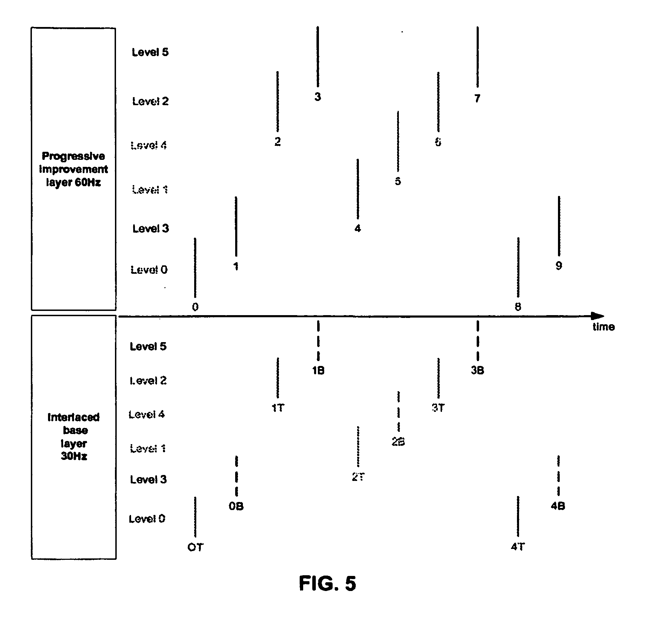

According to another aspect of the invention, described with reference to figure 5, the temporal levels associated with the pictures and fields are modified in relation to the levels associated with the pictures and fields of figure 4. Note that within the framework of the SVC standard, the temporal levels are coded in the headers of each NAL unit as described above. According to the invention, for each picture of the base layer, a temporal level is associated with the second field of the said picture, i.e. with the BOTTOM field, which is strictly higher than the one associated with the first field of the said picture, i.e. with the TOP field. For example, the temporal level 0 is associated with the field OT and the temporal level 3 with the field 0B, the temporal level 1 is associated with the field 2T and the temporal level 4 with the field 2B. Likewise, for each picture pair of the enhancement layer, a temporal level is associated with the said pair that coincides with the second field of a picture of the base layer, namely a BOTTOM field in figure 5, which is strictly higher than the temporal level associated with the picture of the said pair that coincides with the first field of a picture of the base layer, namely a TOP field in figure 5. More generally, temporal levels higher than those of the TOP fields of the base layer and respectively than those of the pictures with an even index of the enhancement layer are assigned to all the BOTTOM fields of the base layer and to all the pictures with an odd index of the enhancement layer. Generally, the temporal levels are thus associated with the pictures and frames in the following manner:
For i=0 to N-1, where N is a positive integer defined in such a manner that 2^{N}+2=M, i.e. N= log(M-2)/log2
For the base layer,
For any k such that k*2^{N-i} lies between 0 and 2^{N}-1:
   - the level i is associated with the TOP fields of index k*2^{N-i}
   - the level i+N assigned to the BOTTOM fields of index k*2^{N-i} For the enhancement layer,
For any k such that k*2^{N+1-i} lies between 0 and 2^{N+1}-1:
   - the level i is associated with the pictures of index k*2^{N+1-i}
   - the level I+N is associated with the pictures of index 1+k*2^{N+1-i}

Moreover, to comply with the constraints imposed by the SVC coding standard, a field or picture of a given temporal level cannot be coded with reference to a picture of a level strictly higher or to a picture not previously coded. For example, according to the invention, the picture 1 with which the temporal level 3 is associated cannot be used as temporal reference for the picture 2 with which the temporal level 2 is associated. Advantageously, it is thus possible by not decoding the NAL units corresponding to the highest temporal levels, namely the temporal levels 3, 4 and 5, to obtain the same temporal scalability as the one obtained with a dyadic GOP structure as defined in figure 3. Hence, by associating the temporal levels with the pictures and fields, all the pictures of the enhancement layer can be coded by using the inter-layer prediction from the corresponding fields of the base layer while keeping a temporal scalability with a fine granularity.

With reference to figure 7, the invention relates to a coding device 6. Only the essential elements of the invention are shown in this figure. The elements that are well known by those skilled in the art of video coders are not shown, e.g. motion estimation module, motion compensation module, etc. The modules shown are functional units that may or may not correspond to physically distinguishable units. For example, these modules or some of them can be grouped together in a single component, or constitute functions of the same software. On the contrary, some modules may be composed of separate physical entities. It comprises a first input 60, a second input 62, a first coding module 64, a first memory 66, a second memory 67, a second coding module 68, a multiplexing module 70 and an output 72.
The first input 60 is suitable to receive a first group l1 of interlaced pictures representative of a video content, called pictures of the base layer. The second input 62 is suitable to receive a second group 11 of progressive pictures representative of the same video content, called pictures of the enhancement layer. The first coding module 64 is suitable to receive, from the first input 60, the interlaced pictures of the base layer and to code, in the form of a first stream S1, the said pictures in field mode. The pictures of the base layer are coded for example in the video coding standard MPEG-4 AVC, the temporal dependences between fields being determined by the hierarchical GOP structure defined with reference to figure 2. For this purpose, the fields are therefore coded according to a predefined coding order. A field is possibly coded fully or partly with reference to another previously coded field, and reconstructed and stored in the first memory 66. Once coded and reconstructed, the fields are possibly stored in the first memory 66 and in the second memory 67. The first coding module implements step 10 of the method according to the invention.
According to an essential characteristic of the invention, the second coding module 68 is suitable to receive from the second input 62 the progressive pictures of the enhancement layer and to code, in the form of a second stream, S2, said pictures according to the same coding order as the fields of the base layer. The two pictures of the enhancement layer that coincide temporally with two fields of a same picture of the base layer are coded consecutively, the second picture being coded immediately after the first picture which was not the case in the standard structure. For example, with the standard hierarchical GOP structure, the picture 1 is not coded immediately after the picture 0. Indeed, the pictures 8, 4, 2 and 6 are coded between the two. Once coded and reconstructed, the pictures are stored in the second memory 66. The second coding module implements the step 20 of the method according to the invention.
A multiplexing module 70 receives the streams S1 and S2 of the first coding module 64 respectively of the second coding module 68 and multiplexers S1 and S2 into a single stream S that is sent to the output 72.

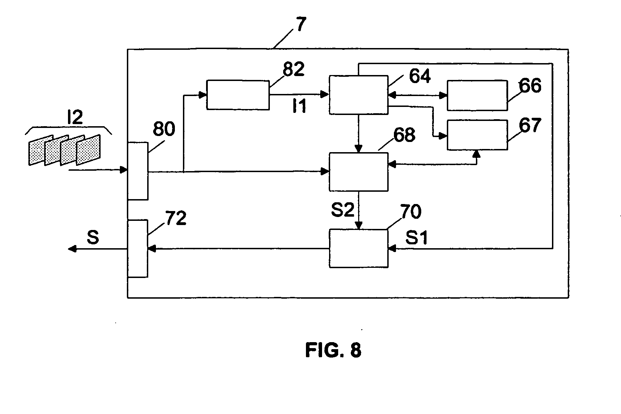

According to a variant shown in figure 8, the coding device 7 comprises a single input 80 that is suitable to receive the second group of pictures. The coding device 7 furthermore comprises a processing module 82 suitable to generate the second group of pictures 12 from the first group of pictures.

According to another aspect of the invention, the coding device 6 is suitable to associate temporal levels with the fields of the base layer and with the pictures of the enhancement layer according to the method described herein.

Of course, the invention is not limited to the embodiment examples mentioned above. In particular, the person skilled in the art may apply any variant to the stated embodiments and combine them to benefit from their various advantages. Notably, the invention described within the framework of the SVC video coding standard, is in no way restricted to said standard. The invention described with two layers, a base layer of interlaced pictures and an enhancement layer of progressive pictures, can be extended to several enhancement layers. Furthermore, the invention described within the framework of a coding of pictures of the base layer into field mode in which the TOP pictures are coded before the BOTTOM pictures ("top field first" mode) can be applied in the same manner to the case of a coding of the pictures of the base layer into field mode in which the BOTTOM pictures are coded before the TOP pictures ("bottom field first" mode).

## Claims

1. Method for coding a video content in the form of a temporally scalable stream comprising a base layer and an enhancement layer, said content being represented by a first group of interlaced pictures formed by a first field interlaced with a second field and by a second group of progressive pictures, each picture of the second group coinciding with a field of the first group, said method comprising the following steps:
- coding, as the base layer, the fields of the first group on M temporal levels (10) according to a first predefined coding order, with M an integer strictly greater than 1, such that the second field of an interlaced picture is coded immediately after the first field of said interlaced picture,
- coding, as the enhancement layer, the pictures of the second group of pictures on M temporal levels (20) in a second predefined coding order,
the method being **characterized in that** said second coding order is equal to the first coding order.

2. Method according to claim 1, wherein the second field of a picture of said first group of pictures is coded at a temporal level strictly higher than the temporal level at which the first field of said picture is coded and wherein the picture of said second group that coincides with said second field is coded at a temporal level strictly higher than the temporal level at which the picture of said second group that coincides with said first field is coded.

3. Method according to claim 1 or 2, wherein a field coded at a given temporal level is coded fully or partly with reference to a previously coded field at a level lower than or equal to said given temporal level.

4. Device for coding a video content in the form of a temporally scalable stream comprising a base layer and an enhancement layer, said content being represented by a first group of interlaced pictures formed by a first field interlaced with a second field and by a second group of progressive pictures, each picture of the second group coinciding with a field of the first group, said device comprising:
- first coding means (64) for coding, as the base layer, the fields of the first group on M temporal levels according to a first predefined coding order, with M an integer strictly greater than 1, such that the second field of an interlaced picture is coded immediately after the first field of said interlaced picture,
- second coding means (68) for coding, as the enhancement layer, the pictures of the second group of pictures on M temporal levels in a second predefined coding order,
the device being **characterized in that** said second coding order is equal to the first coding order.

## Patentansprüche

1. Verfahren zum Codieren eines Videoinhalts in Form eines zeitlich skalierbaren Datenstroms, der eine Basisschicht und eine Anreicherungsschicht umfasst, wobei der Inhalt durch eine erste Gruppe verschachtelter Bilder, die durch ein erstes Halbbild, das mit einem zweiten Halbbild verschachtelt ist, gebildet sind, und durch eine zweite Gruppe progressiver Bilder dargestellt wird, wobei jedes Bild der zweiten Gruppe mit einem Halbbild der ersten Gruppe zusammenfällt, wobei das Verfahren die folgenden Schritte umfasst:
- Codieren der Halbbilder der ersten Gruppe auf M zeitlichen Ebenen (10) in Übereinstimmung mit einer ersten vorgegebenen Codierungsreihenfolge, wobei M eine ganze Zahl ist, die streng größer als 1 ist, sodass das zweite Halbbild eines verschachtelten Bilds unmittelbar nach dem ersten Halbbild des verschachtelten Bilds codiert wird, als die Basisschicht,
- Codieren der Bilder der zweiten Gruppe von Bildern auf M zeitlichen Ebenen (20) in einer zweiten vorgegebenen Codierungsreihenfolge als die Anreicherungsschicht, wobei das Verfahren **dadurch gekennzeichnet ist, dass** die zweite Codierungsreihenfolge gleich der ersten Codierungsreihenfolge ist.

2. Verfahren nach Anspruch 1, bei dem das zweite Halbbild eines Bilds der ersten Gruppe von Bildern auf einer zeitlichen Ebene codiert wird, die streng höher als die zeitliche Ebene ist, auf der das erste Halbbild des Bilds codiert wird, und bei dem das Bild der zweiten Gruppe, das mit dem zweiten Halbbild zusammenfällt, auf einer zeitlichen Ebene codiert wird, die streng höher als die zeitliche Ebene ist, auf der das Bild der zweiten Gruppe, das mit dem ersten Halbbild zusammenfällt, codiert wird.

3. Verfahren nach Anspruch 1 oder 2, bei dem ein Halbbild, das auf einer gegebenen zeitlichen Ebene codiert wird, vollständig oder teilweise mit Bezug auf ein zuvor codiertes Halbbild auf einer niedrigeren oder gleichen Ebene wie die gegebene zeitliche Ebene codiert wird.

4. Vorrichtung zum Codieren eines Videoinhalts in Form eines zeitlich skalierbaren Datenstroms, der eine Basisschicht und eine Anreicherungsschicht umfasst, wobei der Inhalt durch eine erste Gruppe verschachtelter Bilder, die durch ein erstes Halbbild, das mit einem zweiten Halbbild verschachtelt ist, gebildet sind, und durch eine zweite Gruppe progressiver Bilder dargestellt wird, wobei jedes Bild der zweiten Gruppe mit einem Halbbild der ersten Gruppe zusammenfällt, wobei die Vorrichtung umfasst:
- ein erstes Codierungsmittel (64) zum Codieren der Halbbilder der ersten Gruppe auf M zeitlichen Ebenen in Übereinstimmung mit einer ersten vorgegebenen Codierungsreihenfolge, wobei M eine ganze Zahl ist, die streng größer als 1 ist, sodass das zweite Halbbild eines verschachtelten Bilds unmittelbar nach dem ersten Halbbild des verschachtelten Bilds codiert wird, als die Basisschicht,
- ein zweites Codierungsmittel (68) zum Codieren der Bilder der zweiten Gruppe von Bildern auf M zeitlichen Ebenen in einer zweiten vorgegebenen Codierungsreihenfolge als die Anreicherungsschicht,
wobei die Vorrichtung **dadurch gekennzeichnet ist, dass** die zweite Codierungsreihenfolge gleich der ersten Codierungsreihenfolge ist.

## Revendications

1. Méthode de codage d'un contenu vidéo sous la forme d'un flux temporellement scalable comprenant une couche de base et une couche d'amélioration, ledit contenu étant représenté par un premier groupe d'images entrelacées formées d'une première trame entrelacée avec une seconde trame et par un second groupe d'images progressives, chaque image du second groupe coïncidant avec une trame du premier groupe, ladite méthode comprenant les étapes suivantes :
- coder, en tant que couche de base, les trames du premier groupe sur M niveaux temporels (10) selon un premier ordre de codage prédéfini, avec M un entier strictement supérieur à 1, de telle sorte que la seconde trame d'une image entrelacée soit codée immédiatement après la première trame de ladite image entrelacée;
- coder, en tant que couche d'amélioration, les images du second groupe d'images sur M niveaux temporels (20) selon un second ordre de codage prédéfini;
la méthode étant **caractérisée en ce que** ledit second ordre de codage est égal audit premier ordre de codage.

2. Méthode selon la revendication 1, dans laquelle la seconde trame d'une image dudit premier groupe d'images est codée à un niveau temporel strictement supérieur au niveau temporel auquel est codé la première trame de ladite image et dans laquelle l'image dudit second groupe qui coincide avec ladite seconde trame est codée à un niveau temporel strictement supérieur au niveau temporel auquel est codé l'image dudit second groupe qui coincide avec ladite première trame.

3. Méthode selon la revendication 1 ou 2, dans laquelle une trame codée à un niveau temporel donné est codée en tout ou partie en référence à une trame précédemment codée à un niveau inférieur ou égal audit niveau temporel donné.

4. Dispositif de codage d'un contenu vidéo sous la forme d'un flux temporellement scalable comprenant une couche de base et une couche d'amélioration, ledit contenu étant représenté par un premier groupe d'images entrelacées formées d'une première trame entrelacée avec une seconde trame et par un second groupe d'images progressives, chaque image du second groupe coïncidant avec une trame du premier groupe, ledit dispositif comprenant:
- des premiers moyens de codage (64) pour coder , en tant que couche de base, les trames du premier groupe sur M niveaux temporels (10) selon un premier ordre de codage prédéfini, avec M un entier strictement supérieur à 1, de telle sorte que la seconde trame d'une image entrelacée soit codée immédiatement après la première trame de ladite image entrelacée;
- des seconds moyens de codage (68) pour coder , en tant que couche d'amélioration, les images du second groupe d'images sur M niveaux temporels (20) selon un second ordre de codage prédéfini ;
le dispositif étant **caractérisé en ce que** ledit second ordre de codage est égal audit premier ordre de codage.
